# EUROPEAN PATENT APPLICATION

(11) **EP 2 194 220 A2**
(43) Date of publication of application: **09.06.2010**
(21) Application number: 09100137.0
(22) Date of filing: 21.02.2009
(51) Int. Cl.: E06B 1/08

(54) **Insulating wooden window or door stile**

(30) Priority: 02.12.2008 PL 38665508
(71) Applicant: Wiktorczyk, Tomasz, 43-200 Pszczyna (PL)
(72) Inventor: Wiktorczyk, Tomasz, 43-200 Pszczyna (PL)
(74) Representative: Korga, Leokadia

(57) **Abstract**

The invention is a stile-rail for window or door frames for producing windows with improved thermal and acoustic insulation factor especially for passive houses. The stile-rail for window and door frames made of glued layers of wood according to the invention is **characterized in that** there is at least one interlayer of high insulation factor wood placed between layers of pine, spruce or meranti wood.

## Description

This invention relates to a stile-rail for windows and doors for producing windows with improved thermal and acoustic insulation factor especially for passive houses.

It is a well known method to produce stile-rails for window and door frames from glued wood. The most often used kind of wood is pine. Other kinds of wood are also used such as spruce and larch as well as meranti commonly known as mahogany. Ecological building industry creates the demand for windows with high insulation factor.

Utility model no. W- 94950 describes a stile-rail for windows and doors made of pine or spruce slats of identical dimensions and permanently joined by layers of glue. The tree-rings run approximately transversely to the stile-rail. The middle slat is made of lower grade wood with faults such as: knots and blue stains and is positioned in such a way that its tree-rings constitute the so-called 'turbulent path' - i.e. are irregular.

The aim of the invention is to develop a stile-rail for windows and doors with high insulation factor.

The stile-rail for window and door frames made of layers of glued wood, according to the invention is **characterized in that** between the layers of pine or spruce or meranti wood there is at least one interlayer of high insulation factor wood.

Favourably, the high insulation factor interlayer is made of balsa wood.
Favourably, the high insulation factor interlayer is made of poplar wood.
Favourably, the high insulation factor interlayer is made of lime wood.
Favourably, there are two interlayers of balsa wood placed between the glued layers of wood.
Favourably, the high insulation factor wood interlayers constitute no more than 30% of the total thickness of the stile-rail.
Favourably, the balsa interlayer is placed symmetrically, in the middle of the stile-rail section.
Favourably, the stile-rail comprises 4 layers of pine wood of different thickness and two interlayers of high insulation factor wood, which are placed between them asymmetrically so that one interlayer is placed in the middle of the stile-rail section and the other interlayer is placed between two thin layers of pine wood.

It was unexpectedly found that incorporating a high insulation factor wood interlayer into standard glued wood used as a stile-rail for producing window and door frames improves the overall insulation parameters with the strength of the stile-rail remaining unchanged. The characteristic feature of balsa wood is its low density which results in very good insulation properties. The wood is very soft and light with density ranging between 40 and 180 ka/m3 while still remaining relatively strong and elastic. It is not, however, useful for producing solid stile-rails for windows. Poplar and lime wood display similar properties.
The basic advantage of the present invention is obtaining a stile-rail with significantly improved insulation factor for the same stile-rail thickness and with the strength properties remaining unchanged. The use of typical glued pine wood resulted in obtaining windows with insulation factor (U) value of over 1, whereas using the balsa interlayer resulted in the factor value (U) of under 0,8. The thermal insulation factor (U) indicates the amount of heat which is transmitted through 1 m3 of the window area in a time-unit and is expressed in [W/(m3K)].

One embodiment of the invention is presented in the drawing, where:

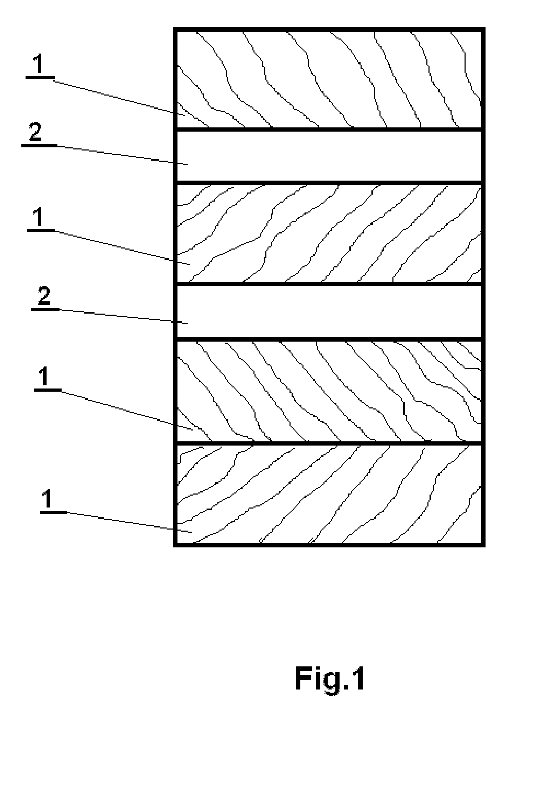

FIG. 1 - presents a stile-rail section with two layers of high insulation factor wood.

### Embodiment 1

The stile-rail for a window or door frame is made of 6 glued layers of wood, including 4 layers of pine wood (1) of 21 mm thickness each and two layers of balsa (2). The thickness of each balsa interlayer was 10 mm. The total thickness of the stile-rail is 105 mm. The wood is glued using waterproof glue in conformity with the DIN EN 204 D4 norm according to a typical well-known gluing technology. The interlayers of balsa are placed between the pine layers asymmetrically, so that one interlayer is placed in the middle of the stile-rail section whereas the other interlayer is placed between two thin layers of pine wood. A stile-rail thus constructed was tested for conformity to the PN-EN 14351-1 norm. Windows and doors - Product standard, performance characteristics - Part 1 "Windows and external pedestrian doorsets without resistance to fire and/or smoke leakage characteristics." Extreme temperatures of -20°C (external) and +20°C (internal) were assumed while testing the thermal transmission coefficient for the frames using the computational method. The value of the thermal transmission coefficient for the frames made according to the present embodiment of the invention calculated for different size windows ranges between 0,7 and 0,8.

## Claims

1. A stile-rail for window or door frame made of layers of glued wood, **characterized by** having at least one interlayer of high insulation factor wood placed between layers of pine, spruce or meranti wood.

2. A stile-rail for window and door frames according to claim1, **characterized in that** the high insulation factor wood interlayer is made of balsa.

3. A stile-rail for window and door frames according to claim1, **characterized in that** the high insulation factor wood interlayer is made of poplar wood.

4. A stile-rail for window and door frames according to claim1, **characterized in that** the high insulation factor wood interlayer is made of lime wood.

5. A stile-rail for window and door frames according to claim1, **characterized in that** there are two interlayers of balsa placed between the layers of glued wood.

6. A stile-rail for window and door frames according to claim1, **characterized in that** the interlayers made of high insulation factor wood constitute no more than 30% of the total thickness of the stile-rail.

7. A stile-rail for window and door frames according to claim1, **characterized in that** the balsa interlayer is placed symmetrically in the middle of the stile-rail section.

8. A stile-rail for window and door frames according to claim1, **characterized in that** it contains 4 layers of pine wood of different thickness and two interlayers of high insulation factor wood, which are placed between them asymmetrically in such a way that one interlayer is placed in the middle of the stile-rail section and the other interlayer is placed between two thin layers of pine wood.
